# EUROPÄISCHE PATENTSCHRIFT

(11) **EP 1 123 672 B1**
(45) Veröffentlichungstag und Bekanntmachung des Hinweises auf die Patenterteilung: **04.06.2003**
(21) Anmeldenummer: 00102843.0
(22) Anmeldetag: 11.02.2000
(51) Int. Cl.: A47B 96/20, B27D 1/08, B32B 21/00

(54) **Verfahren zur Herstellung einer gewölbten Möbelplatte sowie nach diesem Verfahren hergestellte Möbelplatte**
Method for producing a curved furniture panel and a furniture panel produced by the same method
Procédé de fabrication d'un panneau de meuble courbé et panneau de meuble produit selon le même procédé

(43) Veröffentlichungstag der Anmeldung: 16.08.2001
(73) Patentinhaber: Vietmeyer, Adolf, 32108 Bad Salzuflen (DE)
(72) Erfinder: Vietmeyer, Adolf, 32108 Bad Salzuflen (DE)
(74) Vertreter: Dantz, Jan Henning

(56) Entgegenhaltungen:
- EP-A- 0 555 499
- DE-A- 3 926 161
- DE-A- 4 411 663
- DE-U- 8 617 612
- US-A- 3 878 015

## Beschreibung

Die vorliegende Erfindung betrifft ein Verfahren zur Herstellung einer gewölbten Möbelplatte, wie zum Beispiel aus Dokument US-A-3878015 bekannt.

Die Erfindung bezieht sich weiterhin auf eine nach diesem Verfahren hergestellte Möbelplatte.

Aufgabe der vorliegenden Erfindung ist es, ein Verfahren aufzuzeigen, nach dem eine gewölbte Möbelplatte in Echtholzoptik äußerst preiswert herstellbar ist.

Zur Lösung dieser Aufgabe wird erfindungsgsemäß ein Verfahren vorgeschlagen, nach dem
a) zunächst an mehrere Span-, Faser- oder Leichtholzplatten an mindestens einer Außenkante eine Echtholzleiste angeleimt wird,
b) danach eine für die Dicke der herzustellenden Möbelplatte ausreichende Anzahl von derart vorbereiteten Span-, Faser- oder Leichtholzplatten beleimt und zu einem Stapel aufgeschichtet wird,
c) anschließend auf mindestens eine Seite des Stapels ein Furnier, eine Folie, eine Schichtstoffplatte oder dergleichen aufgebracht wird, wobei das Furnier, die Folie, die Schichtstoffplatte oder dergleichen den mit Echtholzleisten versehenen Kantenbereich des Stapels überdeckt,
d) dann der gesamte Stapel mit dem Furnier, der Folie, der Schichtstoffplatte oder dergleichen noch vor dem Abbinden des Leimes in einer Formpresse plastisch verformt wird und
e) nach Abbinden des Leimes die aus dem Stapel und dem Furnier, der Folie, der Schichtstoffplatte oder dergleichen gebildeten Möbelplatte im Kantenbereich auf Maß beschnitten und bearbeitet wird.

Die wesentlichsten Vorteile des erfindungsgemäßen Verfahrens liegen darin, daß nach diesem Verfahren eine gewölbte Möbelplatte zunächst einmal äußerst preiswert herstellbar ist, da die nach dem erfindungsgemäßen Verfahren gefertigte Möbelplatte im wesentlichen aus preiswerten Span-, Faser- oder Leichtholzplatten oder aus einer Mischung derartiger Platten besteht. Andererseits bietet eine derartige Möbelplatte aber auch eine ansprechende Echtholzoptik, die durch das Furnier, die Folie, die Schichtstoffplatte oder dergleichen einerseits und durch die Echtholzleisten andererseits im Bereich mindestens einer Seitenkante erzielt wird.

Es ist möglich, auf beiden Seiten des Stapels ein Furnier, eine Folie, eine Schichtstoffplatte oder dergleichen aufzubringen, so daß die Echtholzoptik der fertigen Möbelplatte von beiden Seiten aus gegeben ist, was beispielsweise dann wünschenswert erscheint, wenn eine Möbelplatte - beispielsweise als Möbeltür - verarbeitet und so von beiden Seiten betrachtet werden kann.

Wird eine Möbelplatte gewünscht, die nicht nur von beiden Seiten, sondern auch über ihren gesamten Kantenbereich hinweg sichtbar ist, können selbstverständlich auch an allen Außenkanten der Span-, Faser- oder Leichtholzplatten und damit auch an der fertigen Möbelplatte Echtholzleisten vorgesehen sein.

Da das Furnier, die Folie, die Schichtstoffplatte oder dergleichen den mit den Echtholzleisten versehenen Kantenbereich des Stapels überdeckt, wird bei der fertigen Möbelplatte eine über die gesamte Oberfläche durchgängige Maserung oder Struktur erzielt, die nicht durch die im Kantenbereich vorgesehenen Echtholzleisten unterbrochen wird. Wird die Möbelplatte im Kantenbereich betrachtet, so ergibt sich auch dort eine Echtholzstruktur durch die dort vorgesehenen Echtholzleisten.

Insbesondere im Bereich der gewölbt verlaufenden Außenkanten der Möbelplatte wird dieser Echtholzeffekt auf einfache Art und Weise erzielt, da die Echtholzleisten an den einzelnen Platten gemeinsam mit dem Stapel im übrigen verformt sind.

Hinsichtlich der Bildung des Stapels können jeweils Span-, Faser- oder Leichtholzplatten gleicher Dicke verwendet werden, ebenso besteht die Möglichkeit, Platten der genannten Art in unterschiedlichen Dicken zu einem Stapel zu verarbeiten.

Es besteht die Möglichkeit, den Stapel ausschließlich aus Spanplatten, Faserplatten oder Leichtholzplatten zu bilden, je nach Anwendungsfall kann aber auch ein Materialmix aus den genannten Platten zum Einsatz kommen.

Dabei kommt der Verwendung von Leichtholzplatten vorrangig die Aufgabe zu, das Gesamtgewicht der fertigen Möbelplatte gegenüber der ausschließlichen Verwendung von Span- oder Faserplatten zu reduzieren.

Sofern die Verwendung von Faserplatten gewählt wird, werden bevorzugt mitteldichte Faserplatten verwendet.

Eine gewölbte Möbelplatte besteht erfindungsgemäß aus einem Stapel von miteinander verleimten und an mindestens einer Außenkante mit Echtholzleisten versehenen Span-, Faser- oder Leichtholzplatten und einem auf mindestens einer Seite des Stapels aufgebrachten Furnier, einer Folie oder einer Schichtstoffplatte, die den mit Echtholzleisten versehenen Kantenbereich des Stapels überdeckt, wobei der Stapel nebst Furnier, Folie, Schichtstoffplatte oder dergleichen plastisch verformt ist.

Dabei kann die Möbelplatte kreisbogenförmig gewölbt sein, es besteht aber auch die Möglichkeit, durch die Verwendung entsprechender Formpressen die Möbelplatte wellen- oder S-förmig gewölbt auszubilden.

Die Möbelplatte wird im Kantenbereich vorzugsweise durch Fräswerkzeuge bearbeitet und kann insbesondere im Bereich der Echtholzleisten mit einem Falz ausgestattet sein, sofern die Möbelplatte als Möbeltür verwendet werden soll.

Der Übergangsbereich zwischen den Echtholzleisten einerseits und dem Furnier, der Folie, der Schichtstoffplatte oder dergleichen andererseits ist zweckmäßigerweise abgerundet.

Anhand der beigefügten Zeichnungen werden das erfindungsgemäße Verfahren und eine erfindungsgemäße Möbelplatte noch einmal ausführlich beschrieben.

Es zeigen:
- Fig. 1a-1e: verschiedene Stadien während der Herstellung einer erfindungsgemäßen Möbelplatte in schematischer Darstellung,
- Fig. 2a-2c: verschiedene Stufen während der plastischen Verformung einer erfindungsgemäßen Möbelplatte,
- Figur 3: einen Teilschnitt durch den Bereich einer Außenkante,
- Figur 4: einen der Figur 3 entsprechenden Teilschnitt durch eine Möbelplatte nach einem weiteren Ausführungsbeispiel der Erfindung,
- Figur 5: eine perspektivische Darstellung einer wellenförmig gewölbten Möbelplatte,
- Figur 6: eine perspektivische Darstellung einer kreisbogenförmig gewölbten Möbelplatte.

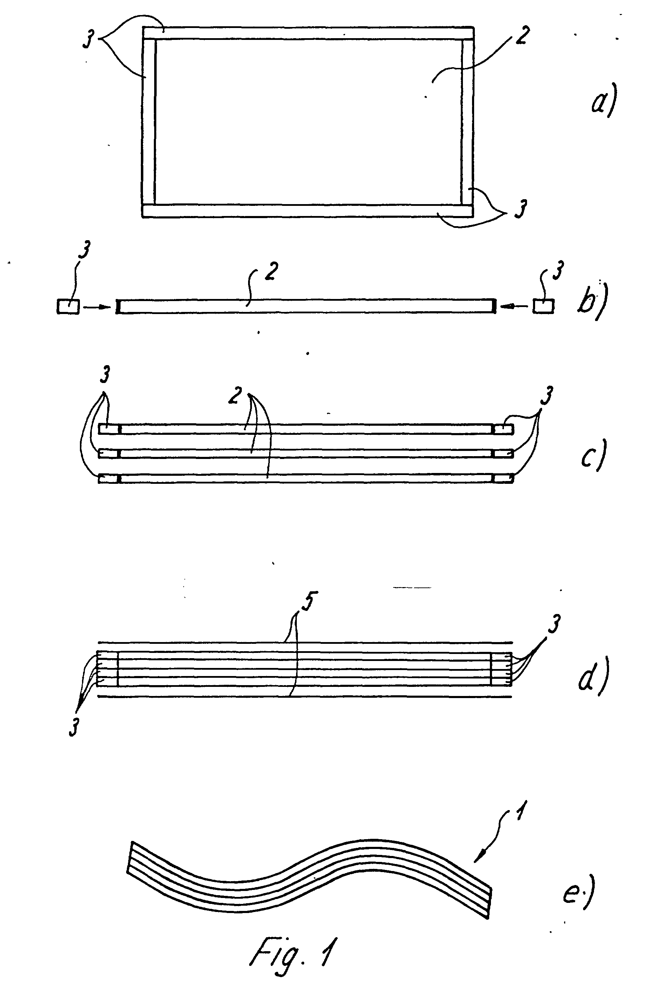

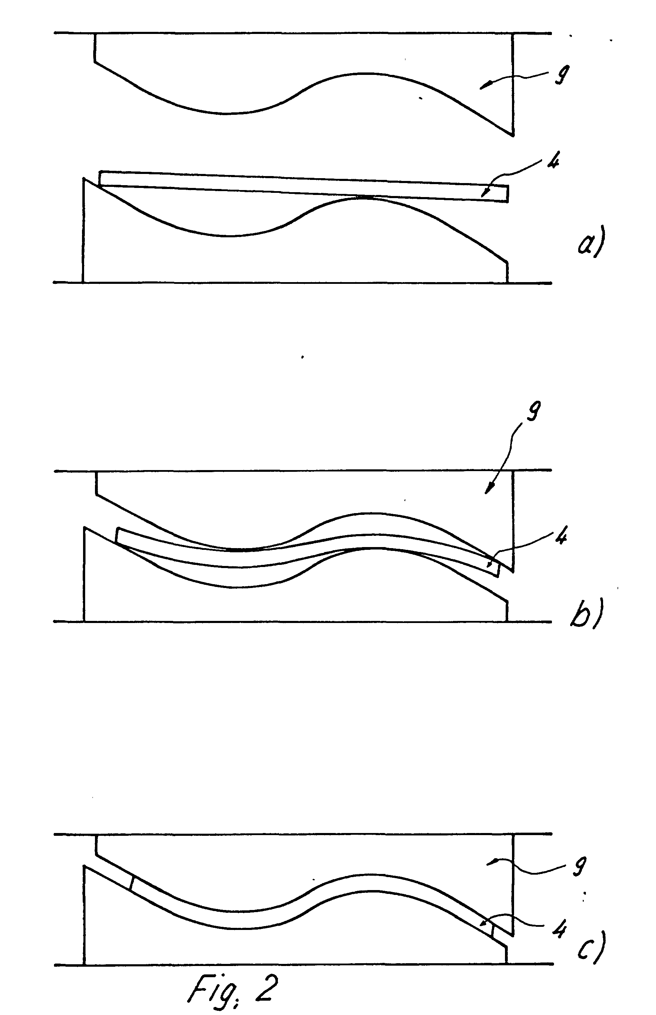

Wie die Figuren 1a-1e in verschiedenen Stufen zeigen, wird eine erfindungsgemäße, gewölbte Möbelplatte 1 aus einer Mehrzahl von einzelnen Platten 2 aufgebaut, wobei die einzelnen Platten 2 aus Spanplatten, Faserplatten oder Leichtholzplatten bestehen können und an mindestens einer Außenkante jeweils mit einer Echtholzleiste 3 versehen sind. Die Echtholzleisten 3 werden an den Platten 2 angeleimt und weisen die gleiche Dicke auf wie die einzelnen Platten 2. Die einzelnen Platten 2 werden nach der Befestigung der Echtholzleisten 3 insgesamt beleimt und zu einem Stapel 4 aufgeschichtet. Auf mindestens eine Seite des Stapels 4 wird an ein Furnier 5, eine Folie, eine Schichtstoffplatte oder dergleichen aufgebracht, deren Größe so gewählt ist, daß dieses Furnier 5, die Folie oder die Schichtstoffplatte den mit den Echtholzleisten 3 versehenen Kantenbereich des Stapels 4 überdecken. Anschließend wird der gesamte Stapel 4 mit dem Furnier 5, der Folie oder der Schichtstoffplatte in einer in den Figuren 2a-2c schematisch dargestellten Formpresse 9 plastisch verformt. Die plastische /9 Verformung erfolgt vor dem Abbinden des Leimes, der zwischen die Platten 2 und das Furnier 5 gebracht ist. Nach dem Abbinden des Leimes kann die fertige Möbelplatte 1 dann im Kantenbereich auf Maß geschnitten und beliebig profiliert werden.

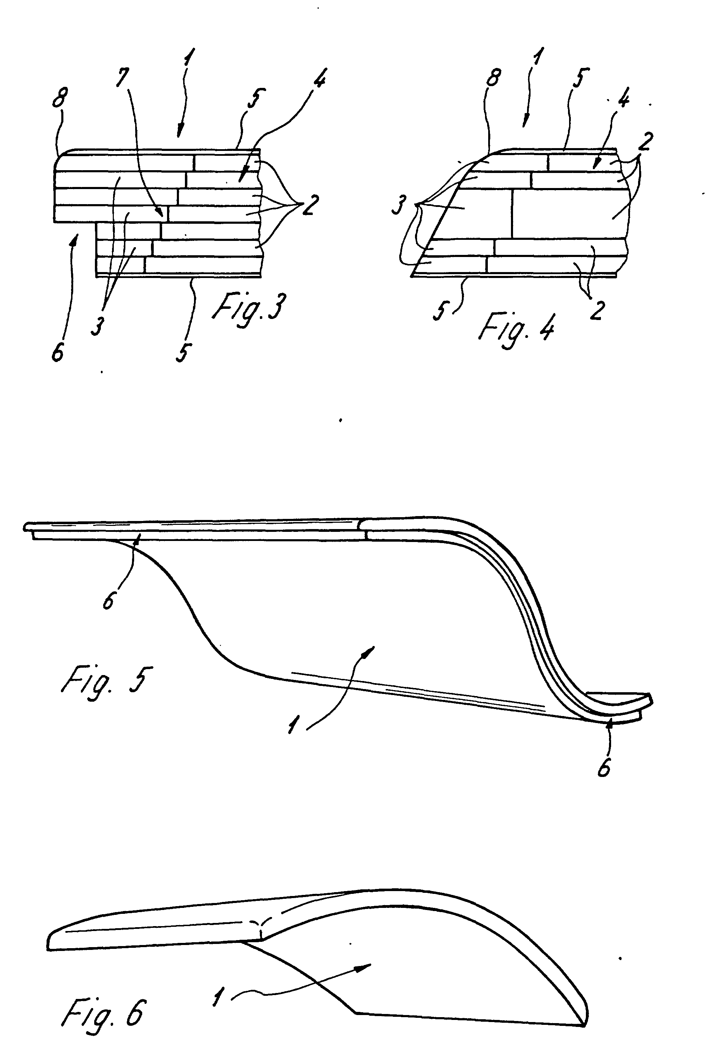

Die Figur 3 zeigt andeutungsweise, daß der Stapel 4 aus Platten 2 gleicher Dicke aufgebaut sein kann.

Abweichend hiervon zeigt Figur 4 die Möglichkeit, daß auch unterschiedlich dicke Platten 2 zu einem Stapel 4 zusammengefaßt werden können, wobei hierzu gesagt werden kann, daß die Verwendung einer Vielzahl von weitestgehend gleich dicken Platten 2 mit geringen Dickenabmessungen dann vorteilhaft ist, wenn relativ starke Krümmungsradien bei der Wölbung erzielt werden sollen. Der Aufbau der Möbelplatte mit unterschiedlichen Dicken oder insgesamt dickeren Platten 2 ist dann denkbar und möglich, wenn relativ geringe Wölbungen der Möbelplatte 1 verwirklicht werden.

Die Platten 2 können innerhalb eines Stapels 4 aus jeweils gleichem Material bestehen, es ist aber auch denkbar, hier aus Zweckmäßigkeitsgründen Faserplatten, Leichtholzplatten und Spanplatten zu mischen, wobei die Verwendung von Leichtholzplatten wie z. B. aus Abachi, Pappel oder dergleichen, insbesondere den Zweck erfüllt, das Gesamtgewicht der fertigen Möbelplatte 1 relativ gering zu halten.

In Figur 3 ist erkennbar, daß im Bereich der Echtholzleisten 3 ein Falz 6 eingefräst ist, was die Nutzung der Möbelplatte 1 als Möbeltür gestattet.

Figur 3 zeigt außerdem, daß sich durch die Wölbung der Möbelplatte 1 während der Herstellung die einzelnen Platten 2 und damit auch die Echtholzleisten 3 unter unterschiedlichen Krümmungsradien relativ zueinander verschieben, so daß sich im Verbindungsbereich ein stufenförmiger Versatz 7 zwischen den übereinander liegenden Lagen der Platten 2 einerseits und der Echtholzleisten 3 andererseits ergibt. Dies bedeutet, daß die Echtholzleisten 3 in einer Ebene auch noch geringfügig auf der Oberfläche der darunter liegenden Platte 2 aufliegen und mit dieser verleimt sind, so daß sich insgesamt eine größere Leimfläche für die Echtholzleisten 3 gegenüber den Platten 2 ergibt als ohne den angesprochenen stufenartigen Versatz 7.

Der Übergangsbereich zwischen den Echtholzleisten 3 einerseits und einem Furnier 5, einer Folie einer Schichtstoffplatte oder dergleichen andererseits kann in Form einer geringfügigen Abrundung 8 erfolgen, was sowohl die Figuren 3 wie auch 4 zeigen.

In Figur 5 ist eine wellen- oder S-förmig gewölbte Möbelplatte 1 gezeigt, die umlaufend mit einem Falz 6 versehen ist, wohingegen Figur 6 eine Möbelplatte 1 zeigt, die lediglich kreisbogenförmig gewölbt ist.

Die Figuren 5 und 6 sollen lediglich beispielhaft zeigen, daß durch das erfindungsgemäße Verfahren weitgehende Gestaltungsmöglichkeiten hinsichtlich der Wölbung einer Möbelplatte 1, die nach dem erfindungsgemäßen Verfahren hergestellt ist, bestehen.

Für die Verbindung zwischen den Echtholzleisten 3 und den Platten 2 wird ebenso ein hochwertiger Leim in Form einer wässrigen Lösung eines Harnstoff-Formaldehyd-Kondensationsproduktes (wie er unter der Marke "Kaurit" z. B. von der Firma BASF vertrieben wird) verwendet wie für die Verbindung der übereinander liegenden Platten 2 und auch für die Verbindung des Furnieres 5 oder dergleichen mit dem Stapel 4.

## Patentansprüche

1. Verfahren zur Herstellung einer gewölbten Möbelplatte, **dadurch gekennzeichnet, daß**
a) zunächst an mehrere Span-, Faser- oder Leichtholzplatten (2) jeweils an mindestens einer Außenkante eine Echtholzleiste (3) angeleimt wird,
b) danach eine für die Dicke der herzustellenden Möbelplatte (1) ausreichende Anzahl von derart vorbereiteten Span-, Faser- oder Leichtholzplatten beleimt und zu einem Stapel (4) aufgeschichtet wird,
c) anschließend auf mindestens eine Seite des Stapels (4) ein Furnier (5), eine Folie, eine Schichtstoffplatte oder dergleichen aufgebracht wird, wobei das Furnier (5), die Folie, die Schichtstoffplatte oder dergleichen den mit Echtholzplatten (3) versehenen Kantenbereich des Stapels (4) überdeckt,
d) dann der gesamte Stapel (4) mit dem Furnier (5), der Folie, der Schichtstoffplatte oder dergleichen noch vor dem Abbinden des Leimes in einer Formpresse (9) plastisch verformt wird und
e) nach Abbinden des Leimes die aus dem Stapel (4) und dem Furnier (5), der Folie, der Schichtstoffplatte oder dergleichen gebildete Möbelplatte (1) im Kantenbereich auf Maß geschnitten und bearbeitet wird.

2. Verfahren nach Anspruch 1, **dadurch gekennzeichnet, daß** auf beide Seiten des Stapels (4) ein Furnier (5), eine Folie, eine Schichtstoffplatte oder dergleichen aufgebracht wird.

3. Verfahren nach Anspruch 1 oder 2, **dadurch gekennzeichnet, daß** zur Bildung des Stapels (4) einzelne Span-, Faser- oder Leichtholzplatten gleicher Dicke verwendet werden.

4. Verfahren nach Anspruch 1 oder 2, **dadurch gekennzeichnet, daß** zur Bildung des Stapels (4) einzelne Span-, Faser- oder Leichtholzplatten unterschiedlicher Dicke verwendet werden.

5. Verfahren nach einem der Ansprüche 1-4, **dadurch gekennzeichnet, daß** zur Bildung des Stapels (4) ausschließlich Spanplatten verwendet werden.

6. Verfahren nach einem der Ansprüche 1-4, **dadurch gekennzeichnet, daß** zur Bildung des Stapels (4) ausschließlich Faserplatten verwendet werden.

7. Verfahren nach Anspruch 1-4, **dadurch gekennzeichnet, daß** zur Bildung des Stapels (4) ausschließlich Leichtholzplatten verwendet werden.

8. Verfahren nach einem der Ansprüche 1-4, **dadurch gekennzeichnet, daß** zur Bildung des Stapels (4) eine Mischung aus Span- und Faserplatten verwendet wird.

9. Verfahren nach einem der Ansprüche 1-4, **dadurch gekennzeichnet, daß** zur Bildung des Stapels (4) eine Mischung aus Span- und Leichtholzplatten verwendet wird.

10. Verfahren nach Anspruch 1-4, **dadurch gekennzeichnet, daß** zur Bildung des Stapels (4) eine Mischung aus Faser- und Leichtholzplatten verwendet wird.

11. Verfahren nach einem der Ansprüche 1-4, **dadurch gekennzeichnet, daß** zur Bildung des Stapels (4) eine Mischung aus Span-, Faser- und Leichtholzplatten verwendet wird.

12. Verfahren nach Anspruch 6, **dadurch gekennzeichnet, daß** als Faserplatten mitteldichte Faserplatten verwendet werden.

13. Verfahren nach einem oder mehreren der vorhergehenden Ansprüche, **dadurch gekennzeichnet, daß** als Leichtholzplatten solche aus Abachi, Pappel oder dergleichen verwendet werden.

14. Verfahren nach einem oder mehreren der vorhergehenden Ansprüche, **dadurch gekennzeichnet, daß** als Leim zur Verbindung der Echtholzleisten (3) mit den Platten (2) und zur Verbindung der Platten (2) untereinander Leim in Form einer wässrigen Lösung eines Harnstoff-Formaldehyd-Kondensationsproduktes verwendet wird.

15. Nach dem Verfahren gemäß Anspruch 1 hergestellte gewölbte Möbelplatte, **dadurch gekennzeichnet, daß** die Möbelplatte (1) aus einem Stapel (4) von miteinander verleimten und an mindestens einer Außenkante mit Echtholzleisten (3) versehene Span-, Faser- oder Leichtholzplatten und einem auf mindestens einer Seite des Stapels (4) aufgebrachten Furnier (5), einer Folie oder einer Schichtstoffplatte besteht, die den mit Echtholzleisten (3) versehenen Kantenbereich des Stapels (4) überdeckt, wobei der Stapel (4) nebst Furnier (5), Folie, Schichtstoffplatte oder dergleichen plastisch verformt ist.

16. Möbelplatte nach Anspruch 15, **dadurch gekennzeichnet, daß** die Möbelplatte (1) kreisbogenförmig gewölbt ist.

17. Möbelplatte nach Anspruch 15, **dadurch gekennzeichnet, daß** die Möbelplatte (1) wellen- oder S-förmig gewölbt ist.

18. Möbelplatte nach einem der Ansprüche 15-16, **dadurch gekennzeichnet, daß** die Möbelplatte (1) im Bereich der Echtholzleisten (3) mit einem Falz (6) ausgestattet ist.

19. Möbelplatte nach einem oder mehreren der Ansprüche 15-17, **dadurch gekennzeichnet, daß** der Übergangsbereich zwischen den Echtholzleisten (3) einerseits und dem Furnier (5), der Folie, der Schichtstoffplatte oder dergleichen andererseits abgerundet ist.

## Claims

1. Process for the production of a curved furniture board, **characterized in that**
a) first a genuine wood strip (3) is glued in each case to at least one outer edge of a plurality of chipboards, fibreboards or light wood boards (2),
b) then a number of chipboards, fibreboards or light wood boards prepared in this manner which is sufficient for the thickness of the furniture board (1) to be produced is coated with glue and placed one on top of the other to form a stack (4),
c) then a veneer (5), a sheet, a laminated board or the like is applied to at least one side of the stack (4), the veneer (5), the sheet, the laminated board or the like covering that edge region of the stack (4) which is provided with genuine wood boards (3),
d) then the entire stack (4) with the veneer (5), the sheet, the laminated board or the like is plastically deformed in a moulding press (9) before the glue sets and
e) after setting of the glue, the furniture board (1) formed from the stack (4) and the veneer (5), the sheet, the laminated board or the like is cut to size in the edge region and is processed.

2. Process according to Claim 1, **characterized in that** a veneer (5), a sheet, a laminated board or the like is applied to both sides of the stack (4).

3. Process according to Claim 1 or 2, **characterized in that** individual chipboards, fibreboards or light wood boards of the same thickness are used for forming the stack (4).

4. Process according to Claim 1 or 2, **characterized in that** individual chipboards, fibreboards or light wood boards of different thickness are used for forming the stack (4).

5. Process according to any of Claims 1-4, **characterized in that** exclusively chipboards are used for forming the stack (4).

6. Process according to any of Claims 1-4, **characterized in that** exclusively fibreboards are used for forming the stack (4).

7. Process according to any of Claims 1-4, **characterized in that** exclusively light wood boards are used for forming the stack (4).

8. Process according to any of Claims 1-4, **characterized in that** a mixture of chipboards and fibreboards is used for forming the stack (4).

9. Process according to any of Claims 1-4, **characterized in that** a mixture of chipboards and light wood boards is used for forming the stack (4).

10. Process according to any of Claims 1-4, **characterized in that** a mixture of fibreboards and light wood boards is used for forming the stack (4).

11. Process according to any of Claims 1-4, **characterized in that** a mixture of chipboards, fibreboards and light wood boards is used for forming the stack (4).

12. Process according to Claim 6, **characterized in that** the fibreboards used are medium-density fibreboards.

13. Process according to one or more of the preceding claims, **characterized in that** the light wood boards used are those comprising obeche, poplar or the like.

14. Process according to one or more of the preceding claims, **characterized in that** glue in the form of an aqueous solution of a urea/formaldehyde condensate is used as glue for bonding the genuine wood strips (3) to the boards (2) and for bonding the boards (2) to one another.

15. Curved furniture board produced by the process according to Claim 1, **characterized in that** the furniture board (1) consists of a stack (4) of chipboards, fibreboards or light wood boards glued to one another and provided with genuine wood strips (3) on at least one outer edge, and a veneer (5) applied to at least one side of the stack (4), a sheet or a laminated board, which covers that edge region of the stack (4) which is provided with genuine wood strips (3), the stack (4) together with the veneer (5), sheet, laminated board or the like being plastically deformed.

16. Furniture board according to Claim 15, **characterized in that** the furniture board **(1)** is curved in the shape of an arc.

17. Furniture board according to Claim 15, **characterized in that** the furniture board (1) is curved into a wave shape or S shape.

18. Furniture board according to either of Claims 15-16, **characterized in that** the furniture board (1) is equipped with a fold (6) in the region of the genuine wood strips (3).

19. Furniture board according to one or more of Claims 15-17, **characterized in that** the transition region between the genuine wood strips (3) on the one hand and the veneer (5), the sheet, the laminated board or the like on the other hand is rounded.

## Revendications

1. Procédé de fabrication d'un panneau de meuble cintré, **caractérisé en ce que**
a) on colle d'abord sur plusieurs panneaux d'aggloméré, de fibres ou de bois léger (2), sur au moins un chant extérieur, une baguette de bois véritable (3),
b) on colle ensuite un nombre suffisant, pour l'épaisseur du panneau de meuble (1) à réaliser, de panneaux d'aggloméré, de fibres ou de bois léger ainsi préparés, et on les empile en une pile (4),
c) on applique ensuite sur au moins une face de la pile (4) un placage (5), une feuille, un panneau stratifié ou similaire, le placage (5), la feuille, le panneau stratifié ou similaire recouvrant la zone de chant de la pile (4) pourvue des panneaux de bois véritable (3),
d) la totalité de la pile (4) avec le placage (5), la feuille, le panneau de stratifié ou similaire est alors déformée plastiquement dans une presse de formage, avant durcissement de la colle, et
e) après durcissement de la colle, le panneau de meuble (1) constitué de la pile (4) et du placage (5), de la feuille, du panneau stratifié ou similaire, est coupé aux dimensions et usiné dans la zone des chants.

2. Procédé selon la revendication 1, **caractérisé en ce qu'**on applique, sur les deux faces de la pile (4), un placage (5), une feuille, un panneau stratifié ou similaire.

3. Procédé selon la revendication 1 ou 2, **caractérisé en ce que** pour former la pile (4), on utilise des panneaux d'aggloméré, de fibres ou de bois léger de même épaisseur.

4. Procédé selon la revendication 1 ou 2, **caractérisé en ce que** pour former la pile (4), on utilise des panneaux d'aggloméré, de fibres ou de bois léger d'épaisseurs différentes.

5. Procédé selon l'une des revendications 1 à 4, **caractérisé en ce que** pour former la pile (4), on utilise exclusivement des panneaux d'aggloméré.

6. Procédé selon l'une des revendications 1 à 4, **caractérisé en ce que** pour former la pile (4), on utilise exclusivement des panneaux de fibres.

7. Procédé selon l'une des revendications 1 à 4, **caractérisé en ce que** pour former la pile (4), on utilise exclusivement des panneaux de bois léger.

8. Procédé selon l'une des revendications 1 à 4, **caractérisé en ce que** pour former la pile (4) on utilise un mélange de panneaux d'aggloméré et de panneaux de fibres.

9. Procédé selon l'une des revendications 1 à 4, **caractérisé en ce que** pour former la pile (4), on utilise un mélange de panneaux d'aggloméré et de panneaux de bois léger.

10. Procédé selon l'une des revendications 1 à 4, **caractérisé en ce que** pour former la pile (4), on utilise un mélange de panneaux de fibres et de panneaux de bois léger.

11. Procédé selon l'uns des revendications 1 à 4, **caractérisé en ce que** pour former la pile (4), on utilise un mélange de panneaux d'aggloméré, de panneaux de fibres et de panneaux de bois léger.

12. Procédé selon la revendication 6, **caractérisé en ce qu'**on utilise comme panneaux de fibres, des panneaux de fibres de densité moyenne.

13. Procédé selon une ou plusieurs des revendications précédentes, **caractérisé en ce qu'**on utilise comme panneaux de bois léger des panneaux en obèche, peuplier ou similaire.

14. Procédé selon une ou plusieurs des revendications précédentes, **caractérisé en ce qu'**on utilise comme colle, pour lier les baguettes de bois véritable (3) aux panneaux (2) et pour lier les panneaux (2) entre eux, de la colle sous la forme d'une solution aqueuse d'un produit de condensation d'urée-formaldéhyde.

15. Panneau de meuble cintré fabriqué suivant le procédé selon la revendication 1, **caractérisé en ce que** le panneau de meuble (1) est constitué d'une pile (4) de panneaux d'aggloméré, de fibres ou de bois léger collés entre eux et pourvus sur au moins un chant extérieur de baguettes de bois véritable (3), ainsi que d'un placage, d'une feuille ou d'un panneau stratifié, appliqué sur au moins une face de la pile (4) et qui recouvre la zone des chants de la pile (4) pourvue des baguettes de bois véritable (3), la pile (4) avec le placage (5), la feuille, le panneau de stratifié ou similaire étant déformée plastiquement.

16. Panneau de meuble selon la revendication 15, **caractérisé en ce que** le panneau de meuble (1) est cintré en arc de cercle.

17. Panneau de meuble selon la revendication 15, **caractérisé en ce que** le panneau de meuble (1) est cintré en forme ondulée ou en forme de S.

18. Panneau de meuble selon l'une des revendications 15 ou 16, **caractérisé en ce que** le panneau de meuble (1) est équipé d'une feuillure (6) dans la zone des baguettes de bois véritable (3).

19. Panneau de meuble selon une ou plusieurs des revendications 15 à 17, **caractérisé en ce que** la zone de transition entre les baguettes de bois véritable (3) d'une part et le placage (5), la feuille, le panneau de stratifié ou similaire d'autre part est arrondie.
